# EUROPEAN PATENT APPLICATION

(11) **EP 1 267 488 A2**
(43) Date of publication of application: **18.12.2002**
(21) Application number: 01310883.2
(22) Date of filing: 24.12.2001
(51) Int. Cl.: H03G 3/30

(54) **Automatically adjusted AGC take over point**

(30) Priority: 14.06.2001 GB 0114593
(71) Applicant: Pace Micro Technology PLC, Shipley, West Yorkshire BD18 3LF (GB)
(72) Inventor: Beales, Stephen, Saltaire, Shipley, BD18 4QB (GB); Rowe, James, Shipley, BD18 4HY (GB)
(74) Representative: Wood, Graham

(57) **Abstract**

The invention relates to the provision of a broadcast data receiver with at least one tuner and a control system therefore. The tuner is tuned to specific frequencies to obtain transmitted data from which a television channel can be generated. The frequency tuned to is dependent on the channel selected and the invention allows the output signal quality for the channel at each frequency to be optimised by allocating a take over point value at which the transition between radio frequency amplitude gain control and Intermediate frequency amplitude gain control occurs on a channel frequency by channel frequency basis rather than the conventional general take over point value..

## Description

The invention relates to the provision of television apparatus including a Broadcast Data Receiver of the type used to receive data transmitted from a remote location, by a broadcaster or broadcasters. The receiver generates from the received broadcast data, television programmes, and other services such as Electronic Programming Guides, home shopping services and the like. The receiver can be provided as an integral part of a television set or in connection therewith.

The data is transmitted in a series of data streams at a number of frequencies within a known range.

In order to receive the required data for selected services or programmes, the broadcast data receiver (BDR) is required to operate at least one tuner and perform a tuning operation to locate and receive the data stream or data streams which are transmitted at the desired frequency. The particular frequency selected is determined by the programme channel or service selected by the user via the BDR.

One known operation within the tuning operation is input signal Gain Control (GC). When this is carried out with a closed loop control system it is usually called Amplitude Gain Control (AGC). Conventionally the tuning system in the BDR consists of a radio frequency (RF) GC circuit and one or more intermediate frequency (IF) GC circuits. Choosing the correct balance between the IF and RF gain levels involves a compromise in performance between optimising the thermal noise performance and the inter-modulation performance of the tuning system.

With relatively small or low signal levels the IF GC is operated first and, as the input signal level is increased, at some pre-defined level, typically referred to as the Take Over point (TOP), the RF GC is activated.

The pre-defined TOP is a compromise level, which is allocated with respect to the parameters of maximum expected input channel slope, IF slip and tuner gain variation.

Because of the fact that the TOP is a compromise, there are several inherent weaknesses in a system with fixed TOP. The first of these is caused by network variation in that if a broad band network BDR has a change of level or slope with respect to changes in channel frequency e.g. high frequency channels having a high power and low frequency channels having low power, then there is a problem in deciding where to set the TOP, because of the slope variation. In this case the low frequency channels are more susceptible to interference from intermodulation products than the high frequency channels, so if the TOP is set to a value to give optimum output signal quality for the high frequency channels then the low frequency channels will suffer from intermodulation degradation. However, if the TOP value is set so that there is no intermodulation degradation of the low frequency channels then the maximum achievable signal quality for the high frequency channels is adversely affected. Furthermore, if the take over point is set such that there is no intermodulation degeneration for the maximum slope expected at the worst BDR in a network of BDR's then this choice of TOP serves to limit the maximum achievable signal quality of the other BDR's in the network even though there may be no slope in the other BDR's.

Thus it will be clear that, the choice of a fixed TOP is always a compromise between maximum signal quality for the majority of network terminals and the amount of degradation permitted for the worst network terminal.

A further problem is experienced with tuner characteristic changes. If one considers a batch of tuners with varying gain, then the design of the operation parameters for the tuner is required to include gain blocks such that there is sufficient gain in the system so that the weakest channel signal required to be received by the BDR, can be received with the lowest gain tuner in the batch of tuners. The TOP value is therefore set for this tuner so that the system will not suffer from intermodulation degradation on the worst expected tuner in one of the network BDR's. However, if the lowest gain tuner is replaced by a higher gain tuner without changing the TOP then the only way the system can adapt to this increased gain and maintain the correct level at the demodulator is to increase the RF attenuation but this in turn reduces the output signal quality. The majority of tuners in the batch will have greater gain than the lowest gain tuner in that batch and so, the maximum output signal quality from the said other tuners is limited by the choice of TOP. The choice of TOP is once more a compromise between maximum signal quality achievable for the majority of tuners and the sensitivity of the tuner with the lowest expected gain.

Conventionally, the problem with varying tuner gain is overcome or minimised by a production alignment. However this does not solve the problem of a tuner which has varying gain with channel frequency.

The aim of the present invention is to provide a method of automatically aligning the tuning system of a BDR with respect to the TOP on a channel by channel basis to optimise the overall tuning performance of a tuning system without suffering the compromises inherent in a fixed TOP tuning system.

In a first aspect of the invention there is provided a broadcast data receiver (BDR) for receiving data transmitted at different frequencies, said data at the different frequencies representing, when processed by the BDR a series of television channels which are selectable for viewing and listening by a user, said BDR including a tuning system having, in operation, a designated take over point (TOP) value at which a radio frequency amplitude gain control (RF AGC) is activated in place of an intermediate frequency amplitude gain control (IF AGC), and characterised in that the TOP value is allocated and set by the BDR on a channel frequency by channel frequency basis.

Although described with reference to a dual AGC tuning system it should be appreciated that the invention is applicable and adaptable with respect to single, dual, or zero IF tuning systems and is applicable to digital or analogue broadband data transmission networks.

The tuning system in accordance with the invention provides the best possible performance regardless of network variations and without the compromises involved in using a fixed TOP. Providing that sufficient IF Gain range is available then if during production the tuner characteristics are changed (e.g. changed to a different, cheaper, world standard pinning tuner) the system will automatically adapt to the tuner's different AGC characteristics without changes required to the software for the control of the tuning system.

By the tuning system control software automatically aligning the TOP for the specific channel frequencies then all of the conventional compromises are eliminated and the output signal quality can be optimised for each channel frequency. The system can also automatically adapt to varying Network terminal conditions, and differing tuner characteristics without production alignment as the TOP alignment is performed with respect to the actual conditions at the time of the user making the channel selection and the BDR tuning to the frequency for the data for the selected channel. Typically, to achieve automatic adjustment a measurement of output signal quality is required, and in one embodiment this is easily achieved for digital systems where an estimation of Bit Error Rate can be obtained from a Forward Error Correction system which is employed. For analogue systems the method of measuring signal quality can vary from system to system.

In a further aspect of the invention there is provided a method for tuning a broadcast data receiver to receive data transmitted at a particular frequency, said method comprising the steps of identifying the frequency at which the data for a channel selected by the user to be watched via the BDR is transmitted, tuning the tuner in the BDR to receive data at the identified frequency and characterised in that during said tuning operation the TOP value is allocated for the RFAGC and IFAGC with reference to a definable and measurable output signal quality parameter.

Specific embodiments of the invention are now described with reference to the accompanying drawings wherein;
Figure 1 illustrates in schematic form, a prior art conventional broadband tuning circuit as incorporated in a BDR;
Figure 2 illustrates in graphical form variation in performance between output signal quality, baseband amplifier gain, and RF alleviation as the input signal level changes;
Figure 3 illustrates in graphical form changes in output signal quality; and
Figure 4 illustrates in schematic form a broadband tuning circuit in accordance with one embodiment of the invention.

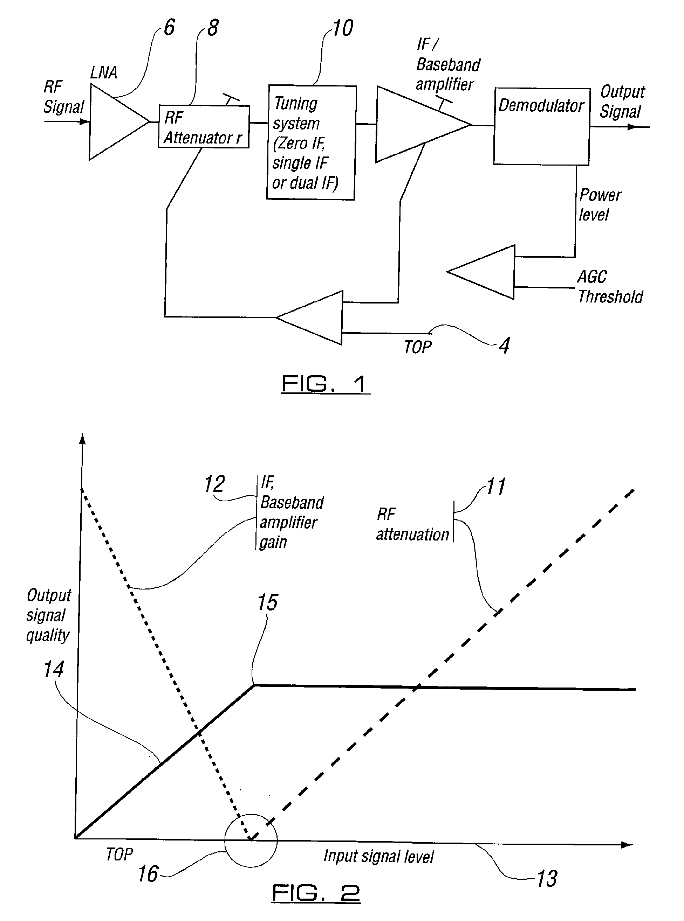

Referring firstly to Figure 1 there is illustrated a broadband tuning system architecture diagram, of the type which is incorporated in a BDR to allow the same to tune to receive data for a user selected television channel. The selection is typically made by the user with a remote control communicable with the BDR. The BDR, having received the user channel selection, then tunes the tuner system to receive the appropriate data for the selected channel by identifying the frequency at which the appropriate data is transmitted and then controlling the tuning system to tune to that frequency. When received, the data is then processed to allow the showing to the user, via a display screen and speakers, of the programmes on the selected channel. When a new channel is selected, a new frequency for that channel data is identified and tuned to, and so on.

In the conventional form of circuit both the AGC Threshold 2 and TOP 4 values are constant and fixed over the whole frequency range and regardless of the channel selection.

Furthermore, all the channel frequencies on the transmission network are present at the input to the LNA 6, attenuator 8 and tuning system 10, regardless of the particular form which the tuning system takes. Thus, as a result, any attenuation of the RF attenuator 8 directly affects the noise figure of the system.

In practical operation, the signal strength can vary from frequency to frequency and in different environmental conditions, as the input signal strength varies, changes in performance can occur. This is illustrated in Figure 2 which shows the impact signal level 13 against Output Signal Quality 14. For very weak input signals the attenuator 8 is set at minimum attenuation and the IF/Baseband amplifier 12 is at maximum gain.

As the signal strength increases the RF attenuator is maintained at minimum and the IF/Baseband amplifier gain 12 is reduced as shown. In this way the noise figure of the system is not affected and the output signal quality increases with increasing input signal quality. However, at some point 15 the inter-modulation performance of the tuning system starts to impinge on the output signal quality 14. All the channel frequency signals on the network will contribute thereafter to inter-modulation interference within the wanted channels frequencies so that relatively small increases thereafter in input signal level can result in relatively large degradation of the output signal quality. This is prevented by setting the TOP 16 such that the RF attenuator will start to attenuate and so keeping the input signal level at the input to the tuner at that standard and below a defined maximum.

Thereafter, as the input signal level 18 is increased above the level 16 set for the TOP, the attenuation 11 of the RF attenuator is increased as shown in Figure 2 and the output signal quality thereafter remains constant despite increased input signal level 13.

In accordance with the invention, the tuning control system automatically aligns the TOP and so all of the compromises that are conventionally required are eliminated and the output signal quality is optimised on a channel frequency by channel frequency basis. The system automatically adapts to varying network terminal conditions, and different tuner characteristics without production alignment.

To achieve automatic adjustment in accordance with the invention a measurement of output signal quality is required and this is relatively easily achieved for digital systems where an estimation of Bit Error Rate can be obtained from the Forward Error Correction system employed. For analogue systems the method of measuring signal quality is required to vary from system to system.

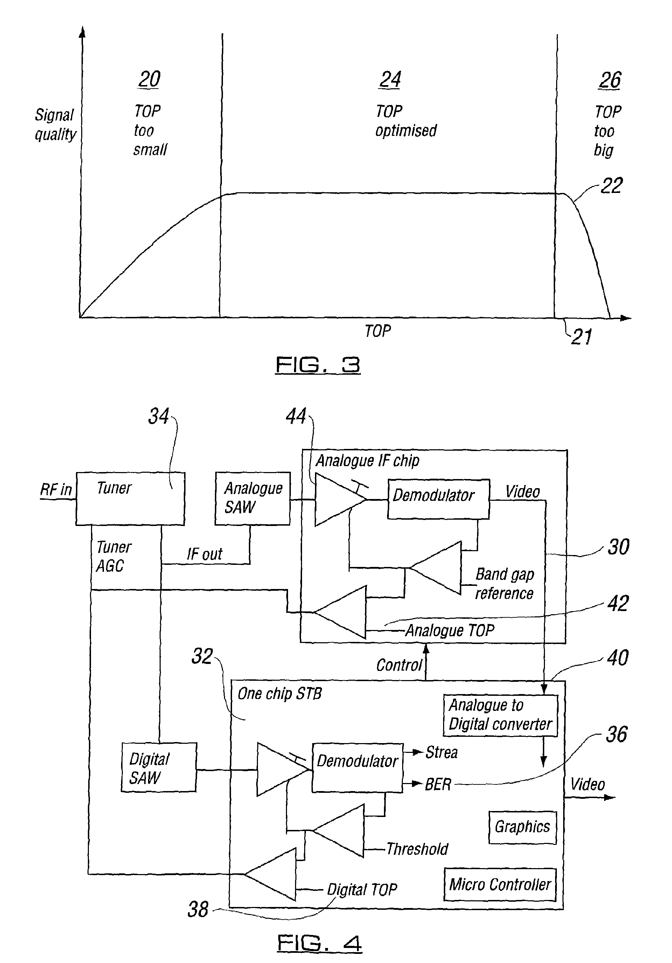

In illustrating the invention system that adapts to the optimum output quality an understanding of how the quality of the signal will vary with TOP is helpful and is now described with reference to Figure 3.

Referring to the Figure 3, which is a graphical representation of TOP 21 against Signal Quality 23. In the portion 20, the TOP is too small and so the RF attenuation is too big. In this region of the curve 22 the slope tends to unity and so a 1dB increase in the RF attenuation results in a 1dB degradation of signal quality.

In the portion 24, the TOP is optimised and any change in the TOP has very little effect on the received signal quality.

However in portion 26, the TOP is too big and the interference caused by inter-modulation products limit the signal quality. The slope of the curve 22 in this portion varies according to the network conditions but it will be considerably steeper than the slope of the curve where the TOP is too small in portion 20. The width of the portion 24 where the TOP is optimised will vary according to the network conditions and characteristics of the tuning system used, but the portion 24 will always be a recognisable and achievable length of the curve 22 in which the same is relatively "flat" as indicated.

To achieve automatic control of the TOP of the tuning system, then a programmable TOP control system is provided and determined on the basis of measurement of the Signal Quality for each channel frequency and an algorithm which looks for the peak of the signal quality curve, for each channel.

The algorithm varies the TOP while measuring the signal quality at each channel frequency, typically when that frequency is selected. This allows an estimate of the gradient of the signal quality curve and then moves the TOP in the direction of the increased quality signal represented by portion 24. When reached, moving the TOP within the optimised area of the signal quality curve will have little effect on the signal quality, so the TOP can be swept through this region until the quality is adversely affected so that the algorithm is continually finding the edges of the optimised region. In this way it is possible to make the system of the invention adaptive and responsive to dynamically varying network conditions.

One specific example of the invention is illustrated with respect to Figure 4. This example shows a system of the invention in use in a combined analogue and digital cable BDR, and the concept is equally applicable to any tuning systems which use both RF and IF/Baseband automatic gain control.

In the figure 4 the AGC lines are wired together in such a way that by manipulating the analogue and digital TOPs the analogue tuner AGC control 30 is not operated when tuned to a digital channel and the digital tuner AGC 32 is not operated when tuned to an analogue channel, so that the tuner 34 is controlled by the appropriate control system.

When the system is used to receive digital data, then the analogue channel is dormant and the received video signal is contained within the transport stream. The Bit Error Rate (BER) estimator 36 gives a measure of signal quality and thus the Digital TOP control 38 is directed to a value for each channel frequency, when selected so that the TOP level lies within portion 24 of Figure 3 with respect to signal quality.

When the system of Figure 4 is used to receive analogue data channels then the digital channel is dormant and the received video signal is digitised 40 so that graphics can be added. A measure of signal quality is achieved by measuring a known point in the received video signal. In this instance the digitised back porch value is sampled on a line-by-line basis. By comparing the peak value with a moving average of the back porch, an estimate of the noise in the analogue channel can be made. The Analogue TOP control 42 is achieved via control words sent to the Analogue IF chip 44.

In both digital and analogue cases the automatic TOP algorithm has the signals it requires to optimise the TOP. All of the compromises in the case of traditional prior art tuning systems that require the use of a fixed TOP are avoided and so the tuner will give the best possible performance regardless of network variations and on a channel frequency by channel frequency basis as the TOP level is set to be within the portion 24 of the signal quality curve 22 of the Figure 3.

## Claims

1. A broadcast data receiver (BDR) for receiving data transmitted at different frequencies, said data at the different frequencies representing, when processed by the BDR a series of television channels which are selectable for viewing and listening by a user, said BDR including a tuning system having, in operation, a designated take over point (TOP) value at which a radio frequency amplitude gain control (RF AGC) is activated in place of an intermediate frequency amplitude gain control (IF AGC), and **characterised in that** the TOP value is allocated and set by the BDR on a channel frequency by channel frequency basis.

2. A broadcast data receiver according to claim 1 **characterised in that** the receiver allocates TOP value on a television channel by television channel basis with respect to any of single, dual or zero intermediate frequency tuning systems.

3. A broadcast data receiver according to claim 1, **characterised in that** the receiver is capable of receiving digital broadcast data.

4. A broadcast data receiver according to claim 1 **characterised** I that the broadcast data receiver is capable of receiving analogue broadcast data.

5. A broadcast data receiver according to claim 1 **characterised in that** adjustment of the TOP value is made with reference to a measurement value of output signal quality for the selected television channel.

6. A broadcast data receiver according to claim 5 **characterised in that** the measurement of output signal quality is achieved for digital data with respect an estimation of the Bit Error Rate obtained from measurement of a forward error correction system.

7. A broadcast data receiver according to claim 1 **characterised in that** the TOP value allocated can vary from channel to channel.

8. A broadcast data receiver according to claim 1 **characterised in that** the TOP value allocated is unique to the particular BDR on which the channel selection has been made.

9. A broadcast data receiver according to claim 1 **characterised in that** the tuning system control software automatically allocates the TOP value for the specific channel frequencies and optimises the output signal quality for each channel frequency.

10. A broadcast data receiver according to claim 9 **characterised in that** the system automatically adapts to varying Network terminal and BDR environmental conditions.

11. A method for tuning a broadcast data receiver to receive data transmitted at a particular frequency, said method comprising the steps of identifying the frequency at which the data for a channel selected by the user to be watched via the BDR, tuning the tuner in the BDR to receive data at the identified frequency and **characterised in that** during said tuning operation the TOP value is allocated for the RFAGC and IFAGC with reference to a definable and measurable output signal quality parameter.

12. A method according to claim 11 **characterised in that** if digital data is received the output signal quality parameter used is the Bit Error Rate.
